# EUROPEAN PATENT SPECIFICATION

(11) **EP 3 751 545 B1**
(45) Date of publication and mention of the grant of the patent: **30.03.2022**
(21) Application number: 19710997.8
(22) Date of filing: 07.02.2019
(51) Int. Cl.: G09B 23/28

(54) **SYSTEM FOR SIMULATING ENDOSCOPIC PROCEDURES, AND METHOD OF ASSEMBLING A SYSTEM FOR SIMULATING ENDOSCOPIC PROCEDURES**
SYSTEM ZUR SIMULATION VON ENDOSKOPISCHER VERFAHREN, UND VERFAHREN ZUM ZUSAMMENBAU DAVON
SYSTÈME DE SIMULTATION DE PROCÉDURES ENDOSCOPIQUES ET PROCÉDÉ DE MONTAGE D'UN SYSTÈME DE SIMULATION DE PROCÉDURES ENDOSCOPIQUES

(30) Priority: 08.02.2018 BR 102018002634
(43) Date of publication of application: 16.12.2020
(73) Proprietor: Sociedade Beneficente de Senhoras Hospital Sírio Libanês, 01308-050 São Paulo - SP (BR)
(72) Inventor: HASHIBA, Kiyoshi, 05471-000 São Paulo SP (BR)
(74) Representative: do Nascimento Gomes, Rui
(86) International application number: PCT/BR2019/050033
(87) International publication number: WO 2019/153062

(56) References cited:
- WO-A1-2015/188052
- WO-A2-01/88882
- DE-A1-102007 008 205
- US-A- 2 495 568
- US-A- 5 785 531

## Description

The present invention refers to a system for simulating endoscopic procedures, and more specifically a simulation system designed for endoscopic procedure training in the biliopancreatic system, which enables the simulation of multiple different procedures individually or simultaneously, having removable and customizable parts, while also permitting easy visualization of the procedure.

The present invention also refers to a method of assembling a simulation system as mentioned above.

### Description of the State of the Art

Endoscopy is a medical specialty that encompasses multiple procedures to diagnose and operate patients by inserting an instrument inside the body. In particular, biliopancreatic endoscopy concerns diagnosis and treatment by manipulating accessories and/or instruments inside the biliary and pancreatic ducts of a patient.

Since these are precision and risk procedures, the teaching of endoscopy and associated procedures to students of medicine or less experienced professionals in the field, should not only focus on the theory involved, but also on practicing the procedure itself.

With this need in mind, multiple practical teaching methods have been developed over time to enable improved understanding of endoscopy procedures, particularly of biliopancreatic endoscopy. Firstly, there is the practical method on patients, which despite being the method that best illustrates a real situation, is also the most risky method, since any error committed by the student may have serious consequences for the patient.

Bearing in mind these risks of practicing on real patients, simulation models for endoscopic procedures have been developed, enabling simulated training for a real situation. Although many models have the capacity to reproduce the biliopancreatic system faithfully and enable a few procedures to be simulated, such as the removal of tumors or surgeries on the ampulla of Vater, there are various limitations associated to said models that have not yet been solved.

In the first place, few biliopancreatic endoscopic procedures are covered by current models. Apart from the catheterization procedures of the ampulla of Vater and papillotomy, there is no model described that enables the simulation of various types of endoscopic procedures in the biliary and pancreatic ducts, such as selective cannulation, coledocolithotomy, papillotomy, lithotripsy, prosthesis fitting and biliary tract handling. Nor is there a model that enables multiple such procedures to be performed, or even a model that enables the customization thereof to selectively permit the simulation of any one of these procedures, individually or in combination. It is important to note that although the currently existing digital models enable multiple procedures to be carried out, they use software programs that simulate the procedure without the presence of a physical model and, therefore, do not provide for a realistic simulation. For example, they are unable to reproduce the touch sensation that is characteristic of these procedures.

Moreover, these models for simulating endoscopy of the biliopancreatic system from the state of the art are focused on inserting endoscopic instruments that have a camera to accompany the procedure inside the model, and also an external monitor by way of X-ray, which despite faithfully portraying the real procedure, hampers the identification of the position of the endoscopy apparatus for less experienced users.

Another problem with models from the state of the art is the fact that the parts used to form the simulated biliopancreatic system are not removable, disposable or reusable. Accordingly, a mistake made by a student that harms the model results in the need for maintenance thereof, which leads to a delay in the teaching process.

Accordingly, no system is noted in the state of the art for simulating endoscopic procedures that enables an individual simulation or a combination of multiple procedures, while constituting a structure that enables easy visualization of the procedure and is easily removable and customizable. A simulation system for endoscopic procedures according to the preamble of claim 1 is described in document DE102007009205.

### Objectives of the Invention

A first objective of the present invention is to present a system for simulating endoscopic procedures that enables the simulation of multiple procedures in individual form or in combination.

A second objective of the present invention is to present a system for simulating endoscopic procedures, the structure of which enables easy visualization of the procedure being simulated.

A third objective of the present invention is to present a system for simulating endoscopic procedures, the structure of which is easily customizable to provide the simulation of multiple endoscopic procedures.

A fourth objective of the present invention is to present a system for simulating endoscopic procedures wherein the parts are easily removable and replaceable.

A fifth objective of the present invention is to present a method of assembling said system for simulating endoscopic procedures.

### Brief Description of the Invention

The present invention refers to a system for simulating endoscopic procedures consisting of a shell endowed with at least one recess, which in turn is endowed with an orifice for inserting a biliopancreatic system model.

The biliopancreatic system model consists of a papilla, a biliary duct and a pancreatic duct, the papilla being associated to one of the ends of the biliary duct and to the pancreatic duct. The system is configured to selectively simulate, individually or in combination, the endoscopic procedures of selective cannulation, coledocolithotomy, papillotomy, lithotripsy, prosthesis fitting and biliary tract handling.

In particular, the biliary duct is selectively associable to a retention net configured to retain a stone model inside the biliary duct, and the end of the biliary duct associated to the papilla is endowed with a slit to enable the papilla to be cut.

Moreover, the biliary duct has a dilatation along its length, and is configured to selectively receive a tumor model. In a possible arrangement, the end of the biliary duct opposite the end associated to the papilla splits into two smaller-diameter ducts.

In another possible arrangement, the biliary duct is associated to a cystic duct, and the papilla is made of rubber and coated with a retention cover. Further particularly, the biliary duct and the pancreatic duct are made of transparent material.

According to the above system, the present invention also refers to an assembly method of said system for simulating endoscopic procedures, this method essentially comprising the steps of:
- associating one end of the biliary duct 32 and one end of the pancreatic duct 33 to the papilla 31; and
- associating the papilla 31 to the orifice 20 of the shell 10.

In particular the method may also comprise the steps of:
- inserting a retention net 320 inside the biliary duct 32;
- inserting a stone model 321 on the retention net 320;
- partially dilating the biliary duct 32; and
- associating a tumor model (323) to the biliary duct (32);

### Brief Description of the Drawings

The present invention will now be described in greater detail based on an exemplary execution represented in the drawings. The drawings show:
Figure 1 - is a perspective view of the shell of the model of the present invention in closed position;
Figure 2 - is a perspective view of the shell of the model of the present invention in open position;
Figure 3 - is a lengthwise section of the model of the biliopancreatic system of the present invention;
Figure 4 - is a lengthwise section of the model of the biliopancreatic system of the present invention comprising a net to retain a stone model in the biliary duct;
Figure 5 - is a lengthwise section of the biliopancreatic system model of the present invention with the papilla removed for visualizing a slit at the end of the biliary duct;
Figure 6 - is a lengthwise section of the biliopancreatic system model of the present invention with dilatation in the diameter of the biliary duct;
Figure 7 - is a lengthwise section of the biliopancreatic system model of the present invention comprising a tumor model;
Figure 8 - is a lengthwise section of the biliopancreatic system model of the present invention with a division of the biliary duct at one of its ends and, in the other, with the papilla being associated to a cystic duct, the latter, in turn, being mounted on the associated biliary and pancreatic systems.

### Detailed Description of the Drawings

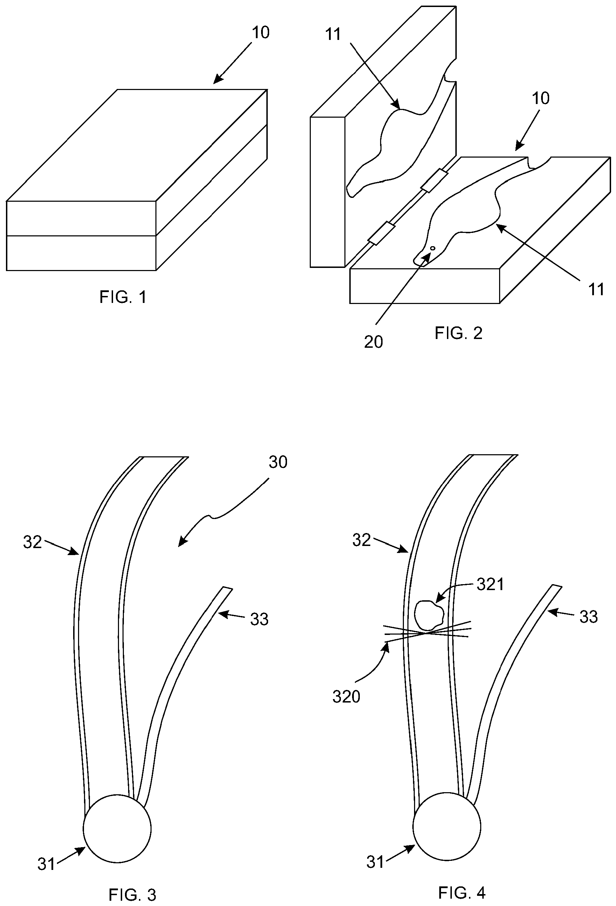

As seen in Figures 1 and 2, the simulation system of the present invention comprises a shell 10 suitable for receiving a model that simulates a biliopancreatic system. A shell 10 comprises at least one recess 11 that reproduces at least partially the esophagus, stomach and duodenum channels of a patient. In a preferred arrangement, the shell 10 is bipartite as shown in Figure 2, such that each part comprises a recess 11 that reproduces half of the esophagus, stomach and duodenum ducts, and the closing of the shell reproduces these ducts in full. Further preferably, the shell 10 is made of fiberglass. In other words, the shell 10 opens in two halves and, when closed, configures a recess 11 or tunnel. This tunnel recalls the esophagus (tubular), stomach (where the tube passes in a sacciform space, that is, a bag with two mouths) and the duodenum, very similar to the esophagus. In this duodenum, there is an orifice 20 for placing the papilla 31 mounted with two tubes (biliary and pancreatic ducts) 32, 33, as shown in Figure 2 and as seen ahead. Therefore, the recess 11 of the shell 10 comprises an orifice 20 configured to receive a biliopancreatic system model 30. Said orifice 20 is positioned at the site of the recess 11 corresponding to the duodenum duct, so as to faithfully simulate the positioning of the biliopancreatic system 30.

Figure 3 illustrates the biliopancreatic system model 30 of the present invention. Said system 30 comprises a model of the ampulla of Vater 31 associated to a model of the biliary duct 32 and to a model of the pancreatic duct 33. The papilla 31 may consist of a chicken heart for performing the cutting procedures, or of rubber coated with a retention cover. The retention cover can also be made of rubber and its function is to retain strange bodies and liquids as may be injecting into the pancreatic and biliary ducts, besides conferring a more real appearance to the papilla 31.

Associated to the papilla 31 are the model of the biliary duct 32 and of the pancreatic duct 33. This association is preferably performed mechanically by pressing the ducts on the papilla. To facilitate the association, both ducts 32, 33 can be joined by hot glue at their ends which will be associated to the papilla 31. Moreover, the assembly is always made with the biliary 32 and pancreatic 33 ducts associated to the level of the papilla 31. Therefore, it is always possible to carry out the selective cannulation procedure, which is fundamental for carrying out the other procedures.

The biliary 32 and pancreatic 33 ducts are made of a transparent and malleable material, such as transparent vinyl. Therefore, it is possible to visualize the procedure being simulated in the system of the present invention without using X-ray equipment or cameras, providing a quicker visual response that is easier for users to identify. Nevertheless, it should be noted that the use of the present invention does not necessarily discard the possibility of using video cameras in conjunction with endoscopy equipment. It is just important to state that the use of the present invention without the presence of such cameras is possible, but not imperative.

The biliary duct 32 preferably has an inner diameter of 10 mm with the end associated to the papilla 31 tapering to a diameter of 5 mm. The diameter of the pancreatic duct is preferably 4 mm.

The system of the present invention is configured to selectively simulate, individually or in combination, the endoscopic procedures of selective cannulation, coledocolithotomy, papillotomy, lithotripsy, prosthesis fitting and biliary tract handling. For an improved understanding of the invention, the term "selectively" should be understood as the capacity to select which procedures will be simulated based on the choice of the constructive arrangement of the present invention.

More specifically, each procedure that the system of the present invention is capable of simulating derives from a specific constructive arrangement of the biliopancreatic system model 30, as explained below.

For the selective cannulation procedure, which consists of inserting a cannula into the biliary duct 32 in a maneuver that directs it to the biliary duct or to the pancreatic duct, no alteration in the constructive arrangement cited above is required. The construction of the system of the present invention as described thus far is sufficient to enable the selective cannulation procedure.

For the coledocolithotomy procedure, which consists of withdrawing stones of the biliary duct, the biliary duct model 32 receives a retention net 320 configured for retaining a stone model 321. The retention net 320 is disposed in a cross section of the biliary duct, as seen in Figure 4. In a possible construction, the retention net 320 consists of multiple metal wires that cross the walls of the biliary duct 32 from the inside out and converge on its center. The net is preferably positioned at a distance of 9 cm from the end of the biliary duct 32 associated to the papilla 31.

The stone model 321 is relatively brittle material which tends to crumble, to enable the handling and, if necessary, grinding thereof. Elements that crumble can be used as stone model 321, such as any type of feed ration, cereals, aggregation of small elements joined by glue (such as beads), among others. The retention net 320 and the stone model 321 can be quickly inserted into the biliary duct 32 and withdrawn therefrom with ease, thus allowing the selectivity of this disposition. For example, steel or plastic wire and hot glue can be used for making the net, which can be easily removed afterwards, and feed ration for the stone model. These elements also have the characteristic of being easily obtainable and disposable, and so can be easily replaced.

Therefore, the constructive arrangement of the system of the present invention as disclosed above and illustrated in Figure 4 provides for the coledocolithotomy procedure in a selective manner.

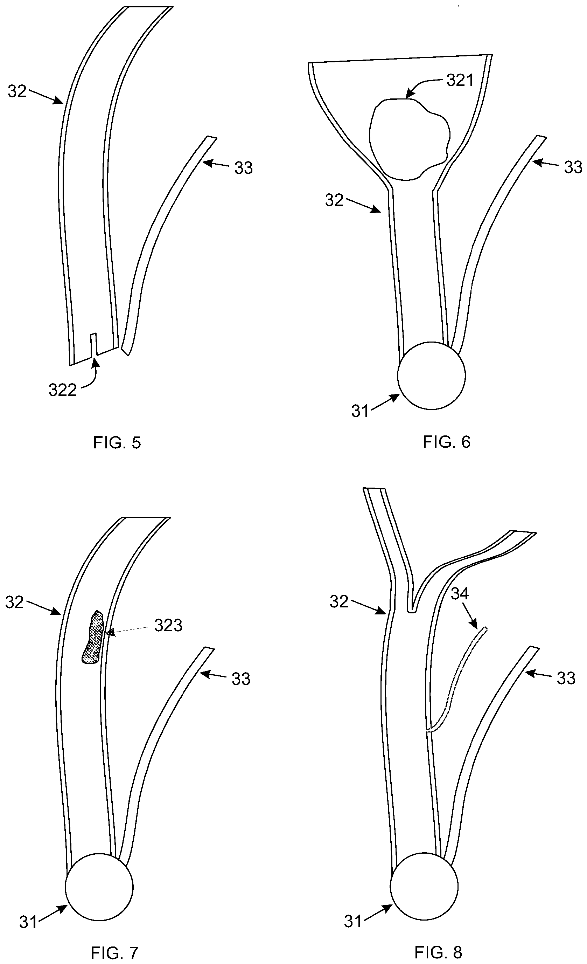

To perform the papillotomy, which consists of the incision of the ampulla of Vater to open the biliary duct, the biliary duct model 32 receives a slit 322 to enable the papilla 31 to be cut. As seen in Figure 5, which shows the biliary 32 and pancreatic 33 ducts without association to the papilla 31, the biliary duct 32 comprises, at the end that is associated to the papilla 31, a slit 322 for the passage of any cutting instrument. The procedure of papillotomy traditionally involves the use of an electric scalpel, such that the use of a papilla 31 made from a chicken heart is preferable, as it allows cutting with the use of an electric current.

The slit 322 prevents the material of which the biliary duct 32 (preferably, transparent vinyl) is composed from generating resistance to the cutting instrument during the procedure, at times completely impeding the cut required for the procedure. Hence the need for the presence of the slit 322 to allow the passage of the instrument to cut through the wall of the biliary duct 32.

To perform the lithotripsy, which consists of stone removal by reduction of size by grinding, crushing, or similar procedure, the biliary duct 32 receives a reduction in its diameter, preferably at about 9 mm from the end associated to the papilla 31, and then it is dilated on its lengthwise extension towards the end opposite the one associated to the papilla 31, that is, it receives a diameter increase section for receiving a stone model 321 of increased size. Preferably, the reduction in diameter is 2 mm in relation to the preferred diameter of the biliary duct 32, in this case a diameter of 10 mm to 8 mm, and the increase in diameter is 4mm in relation to the preferred diameter of the biliary duct 32, in this case a diameter of 10mm to 14 mm.

For clarification, in this constructive arrangement particularly designed to simulate the lithotripsy procedure, the stone model 321 is withheld by the increase in diameter of the biliary duct 32, as seen in Figure 6, and does not need to use the retention net 320 as used in the arrangement that simulates coledocolithotomy.

The biliary duct 32 can be dilated by way of an instrument having a diameter corresponding to the desired diameter of dilatation, which is inserted at the end of the biliary duct 32 that is opposite the end associated to the papilla 31, partially dilating the duct 32 up the border of the lengthwise region of dilatation.

For the procedure of placing a prosthesis, the biliary duct 32 receives a tumor model 323 on the inside thereof, as seen in Figure 7. As an example of a possible procedure, the placement of a prosthesis for draining biliary liquid blocked by the presence of the tumor. The prosthesis passes to the side of or through the tumor and drains the liquid. The tumor model 323 can be made of a spongy material, such as a sponge *per se*. In a possible construction, the biliary duct 32 can receive an orifice in its wall in the region where the tumor model 323 is positioned. The tumor model 323 is then partially inserted into the orifice and glued in the biliary duct 32, thus providing greater stability for said model 323 during procedure simulations.

For biliary tract handling, the biliary duct 32 is split into two smaller-diameter ducts at the end opposite the end associated to the papilla 31. Moreover, a cystic duct 34 is associated to the side of the biliary duct 32 in a region above the end associated to the papilla 31, preferably at a distance of 7cm from this end. The division of the biliary duct 32 and the addition of the cystic duct 34 to the system allow the handling of the tract to be simulated in the most real possible way. In a possible construction, the biliary duct 32 may also receive an extractable element, such as a malleable or flexible putty, to simulate a biopsy procedure. The biliary duct 32 and the cystic duct 34 may be associated by inserting the cystic duct 34 into an orifice previously made in the biliary duct 32 and subsequent gluing by any suitable means.

So considering the construction of the simulation system of the present invention and its multiple constructive arrangements that enable different multiple endoscopic procedures, individually or in combination, it is clarified that the system of the present invention consists of materials that are easily obtainable on the market, easy to handle and of relatively low cost in comparison with the materials used in simulation systems from the state of the art.

Therefore, the system of the present invention presents a highly customizable arrangement and enables the simulation of procedures not exploited in previous simulation systems. Owing to its easy-handling characteristic and replaceable components, the system of the present invention enables the simulation of procedures not found in other simulation systems due to the complexity involved in the application of these procedures in these prior systems.

Another advantage is the high recyclability of the system, in the sense that all the parts are disposable without major loss in economic value and easily replaced, whereby allowing the simulation of a procedure that disables the system to carry out another procedure is no problem, it being suffice to replace the damaged ducts.

Additionally, the transparency characteristic of the ducts used in the system of the present invention allows visualization, that is, direct vision of the procedures without the absolute need for monitoring by camera or by X-ray equipment, facilitating and streamlining identification by the user of what happens during the procedure.

According to the system presented above, the present invention also refers to an assembly method of said system for simulating endoscopic procedures, this method comprising, essentially, the steps of:
- associating one end of the biliary duct 32 and one end of the pancreatic duct 33 to the papilla 31; and
- associating the papilla 31 to the orifice 20 of the shell 10.

In particular, according to the possible constructive arrangements of the system, the method may also comprise the steps of:
- inserting a retention net 320 inside the biliary duct 32;
- inserting a stone model 321 onto the retention net 320;
- partially dilating the biliary duct 32; and distal stenosis to this dilatation.
- associating a tumor model (323) to the biliary duct (32);

## Claims

1. A system for simulating endoscopic procedures comprising a shell (10) endowed with recesses (11), one of the recesses (11) being endowed with an orifice (20) for inserting a biliopancreatic system model (30), the biliopancreatic system model (30) consisting of a papilla (31), a biliary duct (32) and a pancreatic duct (33), the papilla (31) being associated to one of the ends of the biliary duct (32) and to the pancreatic duct (33), wherein the shell (10) is bipartite, **characterized in that** each part comprises a recess (11) that reproduces half of the esophagus, stomach and duodenum ducts, and the closing of the shell (10) reproduces these ducts in full, the system being configured to selectively simulate, individually or in combination, the endoscopic procedures of selective cannulation, coledocolithotomy, papillotomy, lithotripsy, prosthesis fitting and biliary tract handling wherein the end of the biliary duct (32) associated to the papilla (31) is endowed with a slit (322) to enable the papilla to be cut (31) when the endoscopic procedure is the papillotomy and the biliary duct (32) is configured to be selectively associated to a cystic duct (34) when the endoscopic procedure receive a tumor model (323).

2. The system according to claim 1, **characterized in that** the biliary duct (32) is selectively associable to a retention net (320) configured to retain a stone model (321) inside the biliary duct (32), the retention net (320) consisting of multiple wires that cross the walls of the biliary duct (32) from the inside out and converge on its center.

3. The system according to claim 1, **characterized in that** the biliary duct (32) has a reduced diameter followed by a dilatation along its length.

4. The system according to claim 1, **characterized in that** the end of the biliary duct (32) opposite the end associated to the papilla (31) splits into two smaller-diameter ducts.

5. The system according to claim 1, **characterized in that** the papilla (31) is made of rubber and coated with a retention cover.

6. The system according to claim 1, **characterized in that** the biliary duct (32) and the pancreatic duct (33) are made of transparent material.

7. A method of assembling the system for simulating endoscopic procedures as defined in claim 1, **characterized by** comprising the steps of:
- closing the shell (10) so that each recess (11) reproduces the esophagus, stomach and duodenum ducts in full;
- associating one end of the biliary duct (32) and one end of the pancreatic duct (33) to the papilla (31);
- associating the papilla (31) to the orifice (20) of the shell (10), and
- associating a tumor model (323) to the biliary duct (32).

8. The method according to claim 7, **characterized by** further comprising the steps of:
- inserting a retention net (320) inside the biliary duct (32) by inserting multiple wires that cross the walls of said biliary duct (32) from the inside out and converge on its center; and
- inserting a stone model (321) on the retention net (320).

9. The method according to claim 7, **characterized by** further comprising the step of:
- partially dilating the biliary duct (32).

## Patentansprüche

1. Ein System für das Simulieren von endoskopischen Verfahren, das eine mit Aussparungen (11) ausgestattete Schale (10) umfasst, eines der Aussparungen (11) ist mit einer Bohrung (20) ausgestattet, um ein biliopankreatisches Systemmodell (30) einzufügen, worin das biliopankreatische Systemmodell (30) aus einer Papille (31), einem Gallengang (32) und einem Bauchspeicheldrüsengang (33) besteht, die Papille (31) ist eines der Enden des Gallengangs (32) und dem Bauchspeicheldrüsengang (33) zugeordnet, worin die Schale (10) zweiteilig ist, **dadurch gekennzeichnet, dass** jedes Teil eine Aussparung (11) umfasst, die zur Hälfte die Gänge der Speiseröhre, des Magens und des Zwölffingerdarms wiedergibt, und die Schließung der Schale (10) gibt diese Gänge vollständig wieder, das System ist eingerichtet, um ausgewählt, einzeln oder in Kombination, die endoskopischen Verfahren wie selektive Kanülierung, Choledocholithotomie, Papillotomie, Lithotripsie, Protheseanpassung und Behandlung des Gallengangs zu simulieren, worin das Ende des Gallengangs (32), dass der Papille (31) zugeordnet ist, mit einem Schlitz (322) ausgestattet ist, um zu erlauben, dass die Papille (31) geschnitten werden kann, wenn das endoskopische Verfahren die Papillotomie ist, und der Gallengang (32) eingerichtet ist, um, wahlweise, einem zystischen Gang (34) zugeordnet zu werden, wenn das endoskopische Verfahren ein Tumormodell (323) aufnimmt.

2. Das System nach Anspruch 1, **dadurch gekennzeichnet, dass** der Gallengang (32) auswählend einem Rückhaltenetz (320) zugeordnet werden kann, eingerichtet um ein Steinmodell (321) im Inneren des Gallengangs (32) zu behalten, das Rückhaltenetz (320) besteht aus mehreren Drähten, die die Wände des Gallengangs (32) von innen nach außen durchqueren und in dessem Zentrum zusammenlaufen.

3. Das System nach Anspruch 1, **dadurch gekennzeichnet, dass** der Gallengang (32) einen reduzierten Durchmesser hat, gefolgt von einer Dilatation seiner Länge nach.

4. Das System nach Anspruch 1, **dadurch gekennzeichnet, dass** sich das Ende des Gallengangs (32), das dem der Papille (31) zugeordnetem Ende gegenüber liegt, in zwei Gänge mit kleinerem Durchmesser teilt.

5. Das System nach Anspruch 1, **dadurch gekennzeichnet, dass** die Papille (31) aus Gummi gefertigt ist und mit einer Rückhaltungschicht beschichtet ist.

6. Das System nach Anspruch 1, **dadurch gekennzeichnet, dass** der Gallengang (32) und der Bauchspeicheldrüsengang (33) aus durchsichtigem Material gefertigt sind.

7. Ein Verfahren für die Montage des Systems für das Simulieren von endoskopischen Verfahren gemäß Anspruch 1, **dadurch gekennzeichnet, dass** es die folgenden Schritte umfasst:
- Schließung der Schale (10), sodass jede Aussparung (11) die Gänge der Speiseröhre, des Magens und des Zwölffingerdarms vollständig wiedergibt;
- Zuordnung eines Endes des Gallengangs (32) und eines Endes des Bauchspeicheldrüsengangs (33) an die Papille (31);
- Zuordnung der Papille (31) an die Bohrung (20) der Schale (10), und
- Zuordnung eines Tumormodells (323) an den Gallengang (32) .

8. Das Verfahren nach Anspruch 7, **dadurch gekennzeichnet, dass** es zusätzlich die folgenden Schritte umfasst:
- Einfügen eines Rückhaltenetzes (320) in das Innere des Gallengangs (32), indem mehrere Drähte eingefügt werden, die die Wände des besagten Gallengangs (32) von innen nach außen durchqueren und in dessem Zentrum zusammenlaufen; und
- Einfügen eines Steinmodells (321) auf dem Rückhaltenetz (320).

9. Das Verfahren nach Anspruch 7, **dadurch gekennzeichnet, dass** es zusätzlich die folgenden Schritte umfasst:
- partielle Ausdehnung des Gallengangs (32).

## Revendications

1. Un système de simulation de procédures endoscopiques comprenant une coque (10) dotée d'évidements (11), l'un des évidements (11) étant doté d'un orifice (20) pour l'insertion d'un modèle de système biliopancréatique (30), le modèle de système biliopancréatique (30) étant constitué d'une papille (31), d'un canal biliaire (32) et d'un canal pancréatique (33), la papille (31) étant associée à l'une des extrémités du canal biliaire (32) et au canal pancréatique (33), dans lequel la coque (10) a deux parties, **caractérisée en ce que** chaque partie comprend un évidement (11) qui reproduit la moitié des canaux de l'œsophage, de l'estomac et du duodénum, et la fermeture de la coque (10) reproduit intégralement ces canaux, le système étant configuré pour simuler de manière sélective, individuellement ou en combinaison, les procédures endoscopiques de canulation sélective, de cholédocolithotomie, de papillotomie, de lithotripsie, d'ajustement de prothèse et de manipulation des voies biliaires, l'extrémité du canal biliaire (32) associée à la papille (31) étant dotée d'une fente (322) pour permettre de couper la papille (31) lorsque la procédure endoscopique est la papillotomie et le canal biliaire (32) étant configuré de manière à être associé sélectivement à un canal cystique (34) lorsque la procédure endoscopique reçoit un modèle de tumeur (323).

2. Le système selon la revendication 1, **caractérisé en ce que** le canal biliaire (32) peut être associé de manière sélective à un filet de retenue (320) configuré pour retenir un modèle de calcul (321) à l'intérieur du canal biliaire (32), le filet de retenue (320) étant constitué de multiples fils qui traversent les parois du canal biliaire (32) de l'intérieur vers l'extérieur et convergent sur son centre.

3. Le système selon la revendication 1, **caractérisé en ce que** le canal biliaire (32) subit une réduction de diamètre suivie d'une dilatation le long de sa longueur.

4. Le système selon la revendication 1, **caractérisé en ce que** l'extrémité du canal biliaire (32) opposée à l'extrémité associée à la papille (31) se divise en deux canaux de diamètre plus petit.

5. Le système selon la revendication 1, **caractérisé en ce que** la papille (31) est faite de caoutchouc et revêtue d'une couverture de retenue.

6. Le système selon la revendication 1, **caractérisé en ce que** le canal biliaire (32) et le canal pancréatique (33) sont faits d'un matériau transparent.

7. Un procédé d'assemblage du système de simulation de procédures endoscopiques tel que défini dans la revendication claim 1, **caractérisé en ce qu'**il comprend les étapes suivantes :
- fermeture de la coque (10) de façon que chaque évidement (11) reproduise intégralement les canaux de l'œsophage, de l'estomac et du duodénum ;
- association d'une extrémité du canal biliaire (32) et une extrémité du canal pancréatique (33) à la papille (31) ;
- association de la papille (31) à l'orifice (20) de la coque (10), et
- association d'un modèle de tumeur (323) au canal biliaire (32).

8. Le procédé selon la revendication 7, **caractérisé en ce qu'**il comprend en outre les étapes suivantes :
- insertion d'un filet de retenue (320) dans le canal biliaire (32) par insertion de multiples fils qui traversent les parois dudit canal biliaire (32) de l'intérieur vers l'extérieur et convergent sur son centre ; et
- insertion d'un modèle de calcul (321) sur le filet de retenue (320).

9. Le procédé selon la revendication 7, **caractérisé en ce qu'**il comprend en outre l'étape suivante :
- dilatation partielle du canal biliaire (32).
